(19) Europäisches Patentamt / European Patent Office / Office européen des brevets

(11) **EP 2 320 555 B1**

(12) **EUROPEAN PATENT SPECIFICATION**

(45) Date of publication and mention
of the grant of the patent:
**04.08.2021  Bulletin 2021/31**

(51) Int Cl.:
*H02P 29/024* *(2016.01)*   *H02P 29/02* *(2016.01)*
*H02P 3/18* *(2006.01)*   *H02P 6/24* *(2006.01)*

(21) Application number: **10014384.1**

(22) Date of filing: **08.11.2010**

(54) **Motor control apparatus**

Motorsteuerungsvorrichtung

Appareil de commande de moteur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.11.2009  JP 2009256631**

(43) Date of publication of application:
**11.05.2011  Bulletin 2011/19**

(73) Proprietor: **Hitachi Power Semiconductor Device,
Ltd.**
**Hitachi-shi, Ibaraki (JP)**

(72) Inventors:
• **Watanabe, Yasuhiro**
  **Tokyo 100-8220 (JP)**
• **Maeda, Daisuke**
  **Tokyo 100-8220 (JP)**
• **Sakurai, Kenji**
  **Tokyo 100-8220 (JP)**
• **Sasaki, Atsushi**
  **Ibaraki (JP)**
• **Hasegawa, Hiroyuki**
  **Tokyo 100-8220 (JP)**

(74) Representative: **Strehl Schübel-Hopf & Partner
Maximilianstrasse 54
80538 München (DE)**

(56) References cited:
JP-A- 2007 135 400   JP-A- 2008 206 220
US-B1- 6 239 566   US-B1- 6 404 157

• **None**

**Description**

BACKGROUND OF THE INVENTION

The present invention relates to a motor control apparatus and, more particularly, to a motor control apparatus that provides inverter control. This motor control apparatus provides an improvement over the technique for preventing overvoltages due to voltages induced in a motor when it is rotated by application of an external force.

An electric motor such as a fan motor mounted in the outdoor unit of an air conditioner may be forced to rotate by an external force such as external wind force. If so, the motor acts as a generator and produces a voltage (induced voltage) $E_0$ proportional to the rotational speed $\omega$, as given by

$$E_0 = K e \cdot \omega$$

where $Ke$ is a back EMF constant.

In a motor having a back EMF constant of $Ke$, if the external force increases and the rotational speed of the motor increases, the induced voltage increases in proportion to the rotational speed. Furthermore, if the back EMF constant $Ke$ is increased, the induced voltage increases for the same rotational speed. When the induced voltage increases beyond the withstand voltage of the used device, it will be destroyed due to the overvoltage. Therefore, in order to prevent overvoltage, it is necessary to suppress either the back EMF constant $Ke$ or the rotational speed $\omega$.

If the back EMF constant $Ke$ is reduced, the motor efficiency deteriorates and so the method of preventing overvoltages by suppressing the back EMF constant $Ke$ is undesirable to implement. The method of preventing overvoltages by suppressing the rotational speed $\omega$ can be realized by applying a braking force to the motor.

Various methods have been proposed to apply the braking force. There are two major methods: mechanical braking and electrical braking. With the mechanical braking, it is difficult to reduce the size and cost of the machine. Therefore, in recent years, there has been a strong demand for electrical braking. Known methods of providing electrical braking are described in the following patent documents 1-3.

     Patent document 1: JP-A-11-275889
     Patent document 2: JP-A-2007-135400
     Patent document 3: JP-A-10-70897

The methods described in patent documents 1 and 2 can provide electrical braking while preventing overvoltages due to regenerative energy from the motor by detecting the energy and suppressing it by inverter control. However, these methods are intended to decelerate and stop motors which are being driven under inverter control and, therefore, do not function when a motor that is not driven and is at rest is rotated by an external force.

In particular, when the motor is not driven and at rest, a command for deactivating the inverter circuit is being issued. Therefore, the inverter circuit does not operate and it is impossible to apply a braking force to the motor.

Especially, where the motor is rotated under the condition in which no power-supply voltage is supplied to the motor control apparatus, there is another problem, i.e., the inverter control itself cannot be performed because the motor control apparatus does not operate.

On the other hand, a method of applying a braking force by providing a protective circuit operating even when the motor is not driven and at rest is also proposed as described in patent document 3.

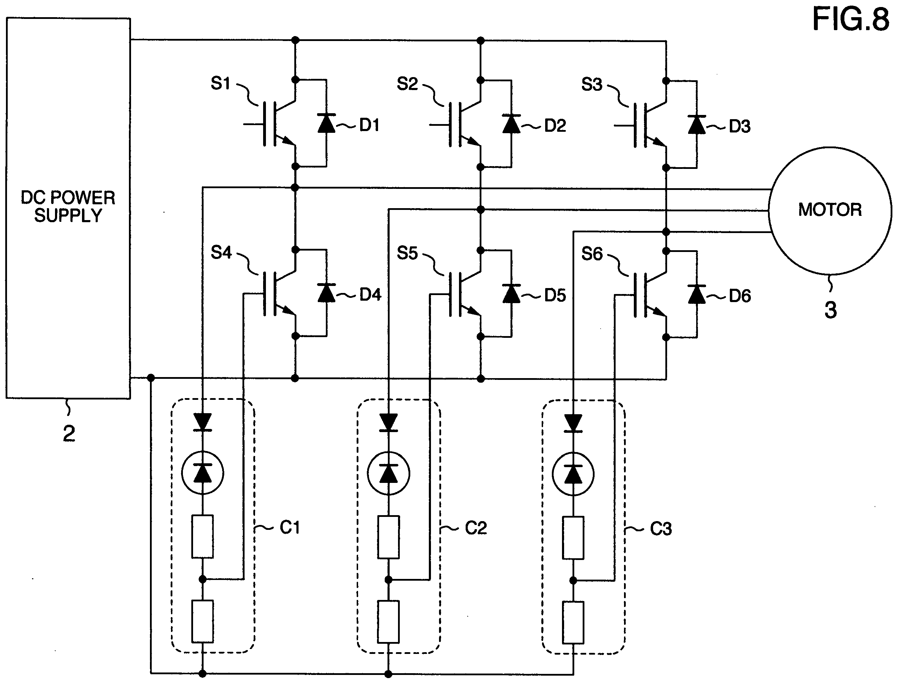

FIG. 8 is a diagram illustrating a motor control apparatus which is equipped with a protective circuit and thus has a function of preventing overvoltages.

As shown in this figure, the motor control apparatus consists essentially of a high-voltage, DC power supply 2 for generating a high-voltage DC voltage, a motor 3, switching devices S1-S6 of 3-phase upper and lower arms, free wheel diodes D1-D6 connected anti-parallel with the switching devices, and protective circuits C1-C3 connected with the gates of the lower-arm switching devices.

Where the motor is rotated by an external force when the power-supply voltage is cut off, if the induced voltage is in excess of a given value, the lower-arm switching devices are turned on by the action of the protective circuits.

Consequently, electric current flows through the lower-arm switching devices and a braking force acts on the motor.

However, in the method as described in the above-cited patent document 3, overvoltages are suppressed but the switching devices are electrically energized irrespective of the magnitude of the current. Therefore, there is the problem that as the rotational speed increases, the current increases, creating the possibility that devices might be destroyed due to overcurrent or temperature rises.

Another prior art example of using back EMF of a motor to generate as system wake-up signal is described in US 6,404,157 B1.

SUMMARY OF THE INVENTION

As described previously, in the prior-art techniques of patent documents 1 and 2, a braking force is applied to a motor being driven. It is impossible to cope with the situation where a command for deactivating the inverter circuit is being issued.

Another problem is that electrical braking cannot be implemented under inverter control when no power-supply voltage is supplied to the motor control apparatus, because the inverter control itself cannot be performed.

With the prior-art technique of patent document 3, a braking force can be generated even when a command for deactivating the inverter circuit is being issued. However, the switching devices are kept energized at all times. Hence, there is the possibility that breakdown may occur for causes other than overvoltages (such as overcurrents and high temperatures).

Because of the above-described problems, in a case where a motor is rotated by an external force when the motor is not driven and at rest such as a fan motor in the outdoor unit of an air conditioner, the prior art techniques cannot be employed. The present situation is that overvoltages are prevented by suppressing the back EMF constant of $Ke$ of the motor. This gives a cause why the motor efficiency cannot be enhanced.

The present invention has been developed in view of the foregoing. It is an object of the present invention to provide a motor control apparatus which, even if a command for deactivating an inverter circuit is being issued, permits inverter control that produces a braking force on a motor when it is rotated.

The above-described object is achieved by the apparatus defined in claim 1.

Also disclosed is a motor control apparatus having an inverter circuit to which a DC voltage is applied, a motor connected with the inverter circuit, a rotational position detection portion for detecting the rotational position of the motor, an inverter driver circuit for driving the inverter circuit, and an inverter control portion for sending a control signal to the inverter driver circuit. The motor control apparatus further includes speed calculation means for calculating the rotational speed of the motor from the rotational position of the motor detected by the rotational position detection portion, start-up command reception means for receiving a command for starting the inverter circuit, and halt occasion speed control means for reducing the rotational speed when the command received by the start-up command reception means is a halt command and when the rotational speed calculated by the speed calculation means is in excess of a given value.

Another motor control apparatus has an inverter circuit to which a DC voltage is applied, a motor connected with the inverter circuit, a DC power supply for generating the DC voltage, an inverter driver circuit for driving the inverter circuit, and a first inverter driver circuit power supply for generating a power-supply voltage for the inverter driver circuit. The motor control apparatus further includes a second inverter driver circuit power supply. When the power-supply voltage supplied from the first inverter driver circuit power supply to the inverter driver circuit is cut off or reduced and the motor is rotated by an external force, the second inverter driver circuit power supply generates the power-supply voltage for the inverter driver circuit from a DC voltage that is obtained by rectifying an induced voltage.

A further motor control apparatus has an inverter circuit to which a DC voltage is applied, a motor connected with the inverter circuit, a DC power supply for generating the DC voltage, an inverter driver circuit for driving the inverter circuit, an inverter control portion for sending a control signal to the inverter driver circuit, and a first inverter control portion power supply for generating a power-supply voltage for the inverter control portion. The motor control apparatus further includes a second inverter control portion power supply. When the power-supply voltage supplied from the first inverter control portion power supply to the inverter control portion is cut off or reduced and the motor is rotated by an external force, the second inverter control portion power supply generates the power-supply voltage for the inverter control portion from a DC voltage that is obtained by rectifying an induced voltage.

An additional motor control apparatus has an inverter circuit to which a DC voltage is applied, a motor connected with the inverter circuit, an inverter driver circuit for driving the inverter circuit, an inverter driver circuit power supply for generating a power-supply voltage for the inverter driver circuit, an inverter control portion for sending a control signal to the inverter driver circuit, a relay, and relay opening-releasing means. When the relay is open and thus the power-supply voltage for the inverter driver circuit is not supplied, if the motor is rotated by an external force, the relay opening-releasing means releases the opening of the relay.

A yet other motor control apparatus has an inverter circuit to which a DC voltage is applied, a motor connected with the inverter circuit, an inverter driver circuit for driving the inverter circuit, an inverter control portion for sending a control signal to the inverter driver circuit, an inverter control portion power supply for generating a power-supply voltage for the inverter control portion, a relay, and relay opening-releasing means. When the relay is open and thus the power-supply voltage for the inverter control portion is not supplied, if the motor is rotated by an external force, the relay opening-releasing means releases the opening of the relay.

According to any motor control apparatus according to the present invention, there arises the advantage that even if a command for deactivating the inverter circuit is being issued and the motor is rotated, inverter control that produces a braking force on the motor is enabled.

Furthermore, regenerative energy can be suppressed. In consequence, a braking force can be produced on the motor while preventing overvoltages due to regenerative energy.

Even when the power-supply voltage is supplied to none of the inverter control portion, inverter driver portion, and other portions, if the motor is rotated by an external force, the supply of the power-supply voltage can be resumed, and inverter control producing a braking force on the motor is enabled.

The operation of the switching devices can be controlled within ranges of currents and temperatures where device breakdown does not occur. Overvoltages can be suppressed while preventing breakdown due to overcurrents, high temperatures, and other factors which would be produced in the prior art techniques.

In addition, because overvoltages are suppressed, overvoltage breakdown is less likely to occur when an external force is applied. Therefore, under the same use environments, a motor having a larger back EMF constant *Ke* can be adopted than where overvoltage suppression is not done. Consequently, the motor efficiency can be improved.

BRIEF DESCRIPTION OF THE DRAWINGS

FIG. 1 is a block diagram illustrating the motor control apparatus according to Example 1 not part of the invention;
FIG. 2 is a block diagram illustrating the motor control apparatus according to Example 2 not part of the invention;
FIG. 3 is a block diagram illustrating the motor control apparatus according to Example 3 not part of the invention;
FIG. 4 is a block diagram illustrating the motor control apparatus according to Example 4 not part of the invention;
FIG. 5 is a block diagram illustrating the motor control apparatus according to Example 5 not part of the invention;
FIG. 6 is a circuit diagram, partially in block form, of a halt occasion motor driver circuit power supply of Example 5;
FIG. 7 is a block diagram illustrating the Embodiment of the motor control apparatus of the invention; and
FIG. 8 is a circuit diagram of a prior art motor control apparatus.

DETAILED DESCRIPTION OF THE INVENTION

When a motor is rotated even if a command for deactivating an inverter circuit is being issued, inverter control producing a braking force on the motor can be implemented with a simple configuration.

Example 1

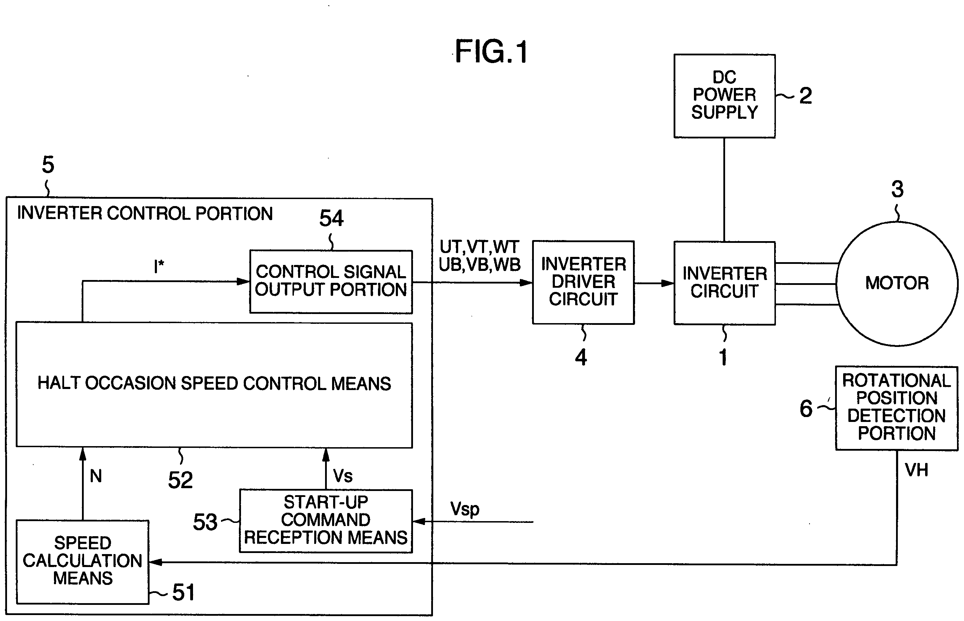

Example 1 not part of the present invention is described by referring to FIG. 1.
In FIG. 1, an inverter circuit 1 receives a DC voltage from a DC power supply 2, converts the voltage into an AC voltage, and delivers it to a motor 3. Generally, the inverter circuit 1 is composed of six switching devices and free wheel diodes connected anti-parallel with the switching devices. An IGBT, MOS transistor, bipolar transistor, or the like is used as each switching device.
An inverter driver circuit 4 receives a control signal from an inverter control portion 5 and applies a gate voltage corresponding to the control signal to the gates of the switching devices to thereby drive the inverter circuit 1. For example, the inverter circuit 1 and the inverter driver circuit 4 may be integrated into one chip forming a high-voltage inverter IC.
The inverter control portion 5 is made of a microcomputer, DSP (digital signal processor), or the like. Components described later (including speed calculation means 51, start-up command reception means 53, halt occasion speed control means 52, and control signal output portion 54) can be realized inside the microcomputer (i.e., the inverter control portion 5) by utilizing software processes executed by the microcomputer and ports.
A rotational position detection portion 6 outputs information VH about the rotational position of the motor 3 to the speed calculation means 51. For instance, a position sensor such as a Hall device or Hall IC is used as the rotational position detection portion 6. The information VH about the rotational position having a given positional relationship with the voltage induced in the motor 3 is output as a voltage value.
The speed calculation means 51 calculates the rotational speed N of the motor 3 from the received information VH about the rotational position and outputs the result to the halt occasion speed control means 52.
There is further provided the start-up command reception means 53 that receives a start-up command Vsp for the inverter circuit 1. The reception means 53 outputs a start-up command signal Vs to the halt occasion speed control means 52, the signal Vs indicating whether the start-up command Vsp is an operation command or a halt command.
When the start-up command signal Vs is a halt command and the rotational speed N of the motor 3 is equal to or higher than a preset speed, the halt occasion speed control means 52 outputs a commanded current value I* for decelerating the motor 3 to the control signal output portion 54.
When the start-up command signal Vs is an operation command, the inverter control portion 5 provides normal inverter control. When the start-up command signal Vs is a halt command and the rotational speed N of the motor 3 is less than the given value, the inverter circuit 1 is kept inoperative.
The control signal output portion 54 outputs control signals UT to WB such as pulse width-modulated (PWM) signals to the inverter driver circuit 4 so that the commanded current value I* is output to the motor 3.
In some modes of the present examples, some components such as the inverter driver circuit 4, inverter control portion 5, and inverter circuit 1 may be incorporated within the motor 3.
Because of the structure described so far, if the motor is rotated by an external force under the condition where a halt command is being issued to the inverter circuit, a braking force can be produced on the motor by inverter control.

Because the induced voltage can be suppressed by generating a braking force on the motor, overvoltage breakdown can be prevented when the motor is rotated by an external force.

Moreover, a motor having a larger back EMF constant of *Ke* can be adopted under the same use environments by suppressing overvoltages. Consequently, the motor efficiency can be improved.

Example 2

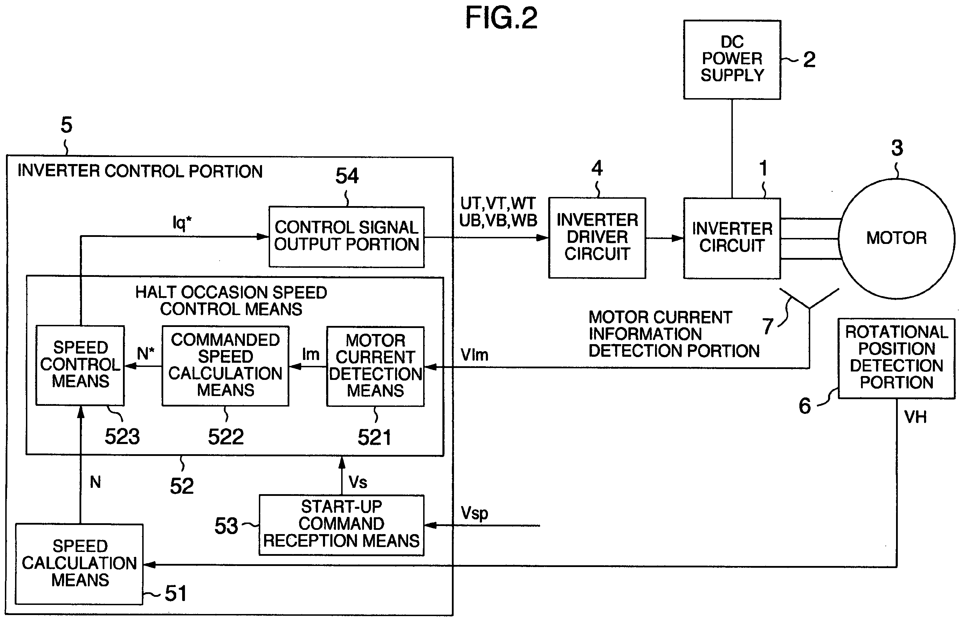

Example 2 not part of the present invention is described by referring to FIG. 2.

The configuration of FIG. 2 is similar to the configuration of FIG. 1 except that a motor current information detection portion 7 is added and that the halt occasion speed control means 52 is composed of motor current detection means 521, commanded speed calculation means 522, and speed control means 523. In the same way as in Example 1, even when a command for deactivating the inverter circuit is being issued, if the motor is rotated by an external force, a braking force can be produced on the motor by inverter control.

The motor current information detection portion 7 is designed, for example, including a current sensor and resistors. The detection portion 7 acquires information for detecting the motor current as a voltage value and outputs it as motor current information VIm to the motor current detection means 521. The current detection means 521 detects the motor current by computing the motor current information VIm and outputs the detected current as detected motor current value Im to the commanded speed calculation means 522. When the detected motor current value Im exceeds a preset current value, the commanded speed calculation means 522 calculates a motor's rotational speed causing the detected value to approach the preset current value and outputs the calculated speed as a commanded speed value N* to the speed control means 523.

Overcurrent breakdown can be prevented by setting the preset value to an electric current at which the switching devices do not suffer from overcurrent breakdown.

The speed control means 523 calculates a first voltage-adjusting value Iq* such that the difference between the commanded speed value N* and the actual rotational speed N is close to 0. The control signal output portion 54 outputs the control signals UT to WB, based on the first voltage-adjusting value Iq*. Consequently, the motor's rotational speed N is controlled to be close to the commanded speed value N*.

The first voltage-adjusting value Iq* is a commanded value of q-axis current (motor current component perpendicular to the magnetic flux). The torque of the braking force can be controlled by adjusting the q-axis current.

Because of the configuration described so far, the current flowing when a braking force is produced on the motor is prevented from becoming an overcurrent. When the motor is braked, overcurrent breakdown of switching devices can be prevented.

Example 3

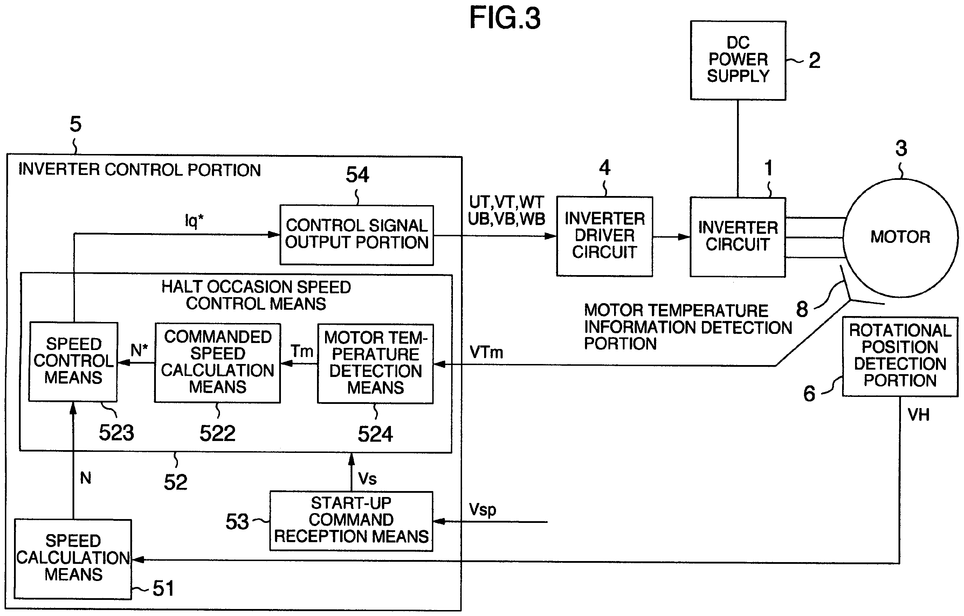

Example 3 not part of the invention is described by referring to FIG. 3.

The configuration of FIG. 3 is similar to the configuration of FIG. 1 except that a motor temperature information detection portion 8 is added and that the halt occasion speed control means 52 is composed of motor temperature detection means 524, commanded speed calculation means 522, and speed control means 523. In the same way as in Example 1, even when a command for deactivating the inverter circuit is being issued, if the motor is rotated by an external force, a braking force can be produced on the motor by inverter control.

In the present example, the motor temperature is kept at or below a preset value by detecting the temperature and controlling the rotational speed, in the same way as for the motor current controlled in Example 2.

The motor temperature information detection portion 8 is made of a temperature sensor such as a thermocouple or thermistor, acquires information for detecting the motor temperature as a voltage value, and outputs the voltage value as motor temperature information VTm to the motor temperature detection means 524.

The motor temperature detection means 524 detects the motor temperature by calculating the motor temperature information VTm and outputs the temperature as a detected motor temperature value Tm to the commanded speed calculation means 522.

When the detected motor temperature value Tm exceeds a preset temperature, the commanded speed calculation means 522 calculates a motor's rotational speed causing the detected temperature to approach the preset temperature and outputs the calculated speed as the commanded speed value N* to the speed control means 523. The preset value is so determined that the components are not destroyed by high temperatures.

The speed control means 523 calculates a first voltage-adjusting value Iq* being a commanded value of q-axis current such that the difference between the commanded speed value N* and the actual rotational speed N becomes close to null, and the control signal output portion 54 outputs the control signals UT to WB, based on the first voltage-adjusting value Iq*. The motor's rotational speed N is controlled to be close to the commanded speed value N*.

Because of the configuration described so far, when a braking force is produced on the motor, it is prevented from becoming excessively hot. Thermal destruction of the components such as switching devices can be prevented.

## Example 4

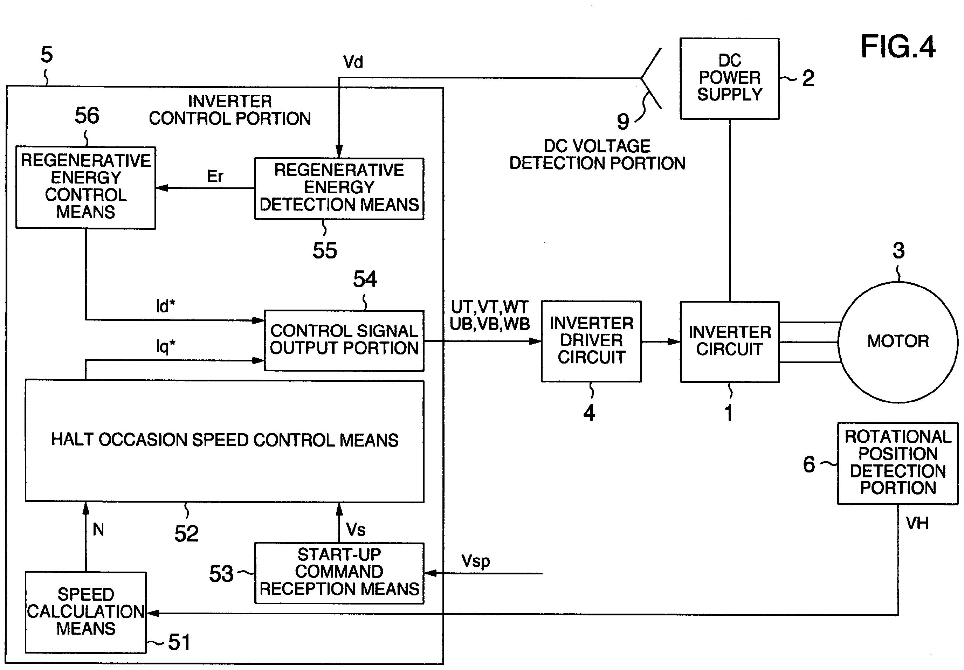

Example 4 not part of the present invention is described by referring to FIG. 4.

The configuration of FIG. 4 is similar to the configuration of FIG. 1 except that a DC voltage detection portion 9, regenerative energy detection means 55, and regenerative energy control means 56 are added.

Where the present example is applied to an electric appliance motor as used in an air conditioner, the DC power supply 2 is generally made of a rectifier circuit that rectifies an AC voltage derived from a commercial AC line. If the motor is rotated by an external force and regenerative energy is produced, the voltage of the DC power supply 2 is raised above the voltage value produced by the DC power supply 2.

In the present example the DC voltage detection portion 9 detects the voltage value Vd of the DC power supply 2 for deriving information and outputs the detected value to the regenerative energy detection means 55, in order to detect the regenerative energy.

A method of acquiring information (such as the DC power value or DC current value of the DC power supply 2) may also be available to detect the regenerative energy.

The regenerative energy detection means 55 calculates the regenerative energy from the voltage value Vd of the DC power supply 2. The value calculated by the detection means 55 is output as a detected regenerative energy value Er to the regenerative energy control means 56.

The regenerative energy control means 56 calculates a second voltage-adjusting value Id* such that the detected regenerative energy value Er becomes close to zero. The second voltage-adjusting value Id* is output to the control signal output portion 54.

The second voltage-adjusting value Id* is a commanded value of d-axis current (i.e., the motor current component parallel to the magnetic flux). The regenerative energy can be controlled by adjusting the d-axis current.

Furthermore, in the same way as in Example 1, the first voltage-adjusting value Iq* is output as a commanded current value to the control signal output portion 54 from the halt occasion speed control means 52. Therefore, a commanded value of q-axis current for preventing overcurrents is output to the control signal output portion 54 by designing the halt occasion speed control means 52, for example, as in Example 2.

The control signal output portion 54 outputs the control signals UT to WB, based on the received first voltage-adjusting value Iq* and second voltage-adjusting value Id*.

Because of the configuration described so far, the regenerative energy Er is controlled to be close to zero and so a braking force can be produced on the motor so as to prevent the power-supply voltage from being raised by the induced voltage.

## Example 5

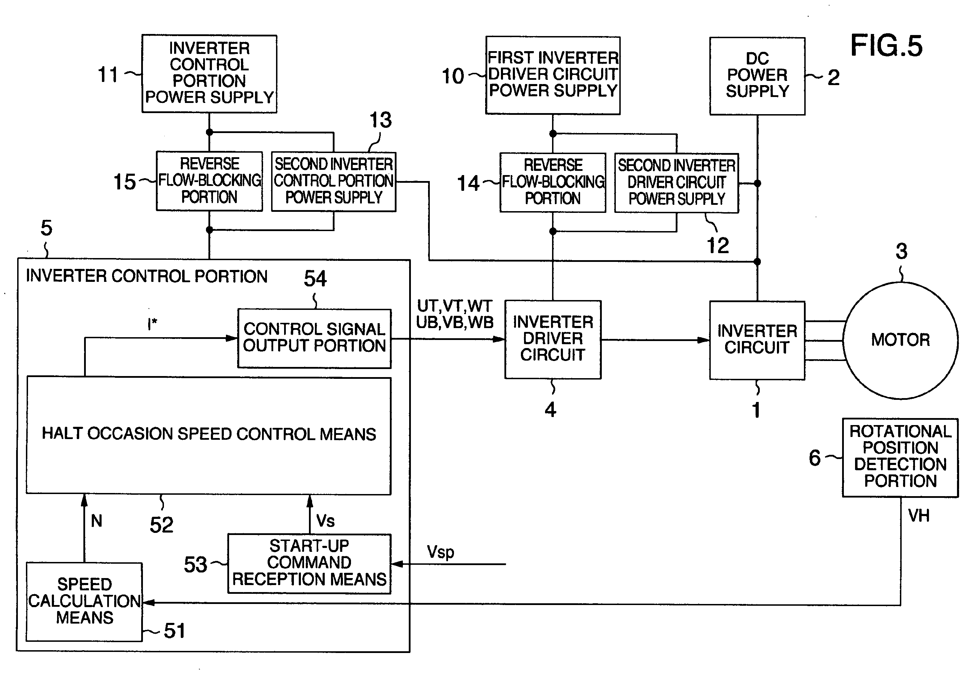

Example 5 not part of the present invention is described by referring to FIG. 5.

The configuration of FIG. 5 is similar to the configuration of FIG. 1 except that a first inverter driver circuit power supply 10 for supplying power-supply voltage to the inverter driver circuit 4, a first inverter control portion power supply 11 for supplying power-supply voltage to the inverter control portion 5, a second inverter driver circuit power supply 12, a second inverter control portion power supply 13, and reverse flow-blocking portions 14, 15 are added.

The second inverter driver circuit power supply 12 is designed as means for supplying power-supply voltage to the inverter driver circuit 4 when the supply of the power-supply voltage from the first inverter driver circuit power supply 10 to the inverter driver circuit 4 is cut off or reduced.

The second inverter driver circuit power supply 12 is connected to all of the first inverter driver circuit power supply 10, the DC voltage input side of the inverter circuit 1, and the inverter driver circuit 4. When power-supply voltage is not supplied from the first inverter driver circuit power supply 10, the power supply 12 generates a given voltage based on the induced DC voltage supplied from the DC voltage input side of the inverter circuit 1 and supplies the generated voltage to the inverter driver circuit 4.

The induced DC voltage is obtained by converting the voltage induced when the motor is rotated by an external force into a DC voltage. In the present example, the induced voltage that is an AC voltage is automatically converted into a DC voltage by the action of a smoothing capacitor and the free wheel diodes. The smoothing capacitor is a part of the DC power supply. The free wheel diodes are incorporated in the inverter circuit 1. Hence, it is not necessary to add a separate power-supply circuit for converting the AC voltage to a DC voltage.

The reverse flow-blocking portion 14 is made of a rectifier device (such as a diode), a switching device, a relay, or the like and prevents the voltage generated by the second inverter driver circuit power supply 12 from flowing back to the first inverter driver circuit power supply 10.

When the supply of power-supply voltage from the first inverter control portion power supply 11 is cut off or reduced, if the motor is rotated, the second inverter control portion power supply 13 and reverse flow-blocking portion 15 can be formed as means for providing power supply to the inverter control portion 5 by designing the second inverter control portion power supply 13 and reverse flow-blocking portion 15 similarly to the second inverter driver circuit power supply 12 and reverse flow-blocking portion 14.

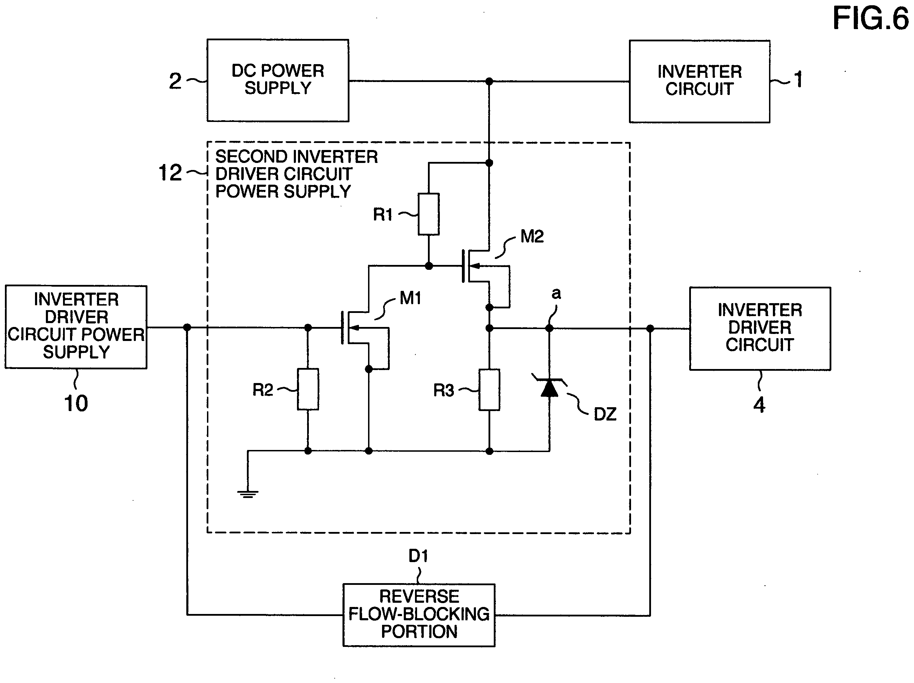

An example of structure of the second inverter driver circuit power supply 12 is shown in FIG 6.

In FIG. 6, the second inverter driver circuit power supply 12 is composed of resistors R1-R3, MOS transistors M1, M2, and a Zener diode DZ.

When power-supply voltage is not supplied from the first inverter driver circuit power supply 10, the MOS transistor M1 is cut off. At this time, if the motor is rotated by an external force, the induced DC voltage is applied, turning the MOS transistor M2 on. Consequently, the induced DC voltage is output as an inverter driver circuit power-supply voltage via the MOS transistor M2. When the potential at point *a* becomes equal to or higher than the breakdown voltage of the Zener diode DZ, a constant DC voltage, i.e., the inverter driver circuit power-supply voltage, is delivered. The breakdown voltage of the Zener diode DZ may be set to an appropriate value as the power-supply voltage of the inverter driver circuit 4. The second inverter control portion power supply 13 can be similarly designed by setting the breakdown voltage of the Zener diode DZ to an appropriate value as the power-supply voltage of the inverter control portion 5.

When power-supply voltage is supplied from the first inverter driver circuit power supply 10, the MOS transistors M1 and M2 are turned on and off, respectively, so that the voltage is no longer delivered. When the first inverter driver circuit power supply 10 is supplying power-supply voltage to the inverter driver circuit 4, the second inverter driver circuit power supply 12 does not generate the power-supply voltage for the inverter driver circuit 4.

When power-supply voltage is not supplied from the first inverter driver circuit power supply 10, if the motor is rotated by an external force, power-supply voltage can be supplied to the inverter driver circuit 4 by constructing the second inverter driver circuit power supply 12 as described so far and using it as the second inverter driver circuit power supply 12 of the motor control apparatus of FIG. 5.

Various methods are available for generating power-supply voltages for the inverter driver circuit 4 and inverter control portion 5 of FIG. 5. In one method, the voltages are obtained by level converting the DC voltage generated by the DC power supply 2. In another method, the AC power supply is rectified to obtain the power-supply voltages. In a further method, one of the power-supply voltages for the inverter driver circuit 4 and inverter control portion 5 is converted to obtain the other power-supply voltage.

For example, where one of the power-supply voltages for the inverter driver circuit 4 and inverter control portion 5 is converted to obtain the other power-supply voltage, it is necessary to install only a second power supply that generates the one of the power-supply voltages. Where the supply of the power-supply voltage is cut off or reduced, the second power supply may be installed or not or its position may vary, for example, depending on the positions and number of relays that cut off the supply. In any case, if the motor is rotated by an external force, power-supply voltage can be supplied to the inverter driver circuit 4 and inverter control portion 5 by installing the second power supply appropriately.

The condition in which the supply of power-supply voltage to the inverter driver circuit 4 and inverter control portion 5 is cut off or reduced is created when a relay is opened in such a way as to cut off the supply of the voltage. This condition is also created when an abnormality such as a blackout or fault occurs.

In the present example, if the motor is rotated by an external force under the condition where a command for deactivating the inverter circuit is being issued, a braking force is produced on the motor by inverter control, in the same way as in examples 1-4.

According to the present example, when the motor is rotated by an external force, power-supply voltage can be supplied to the inverter driver circuit 4 and the inverter control portion 5 even if power-supply voltage is not supplied from the first inverter driver circuit power supply 10 or the first inverter control portion power supply 11. Therefore, a braking force can be produced on the motor.

Embodiment

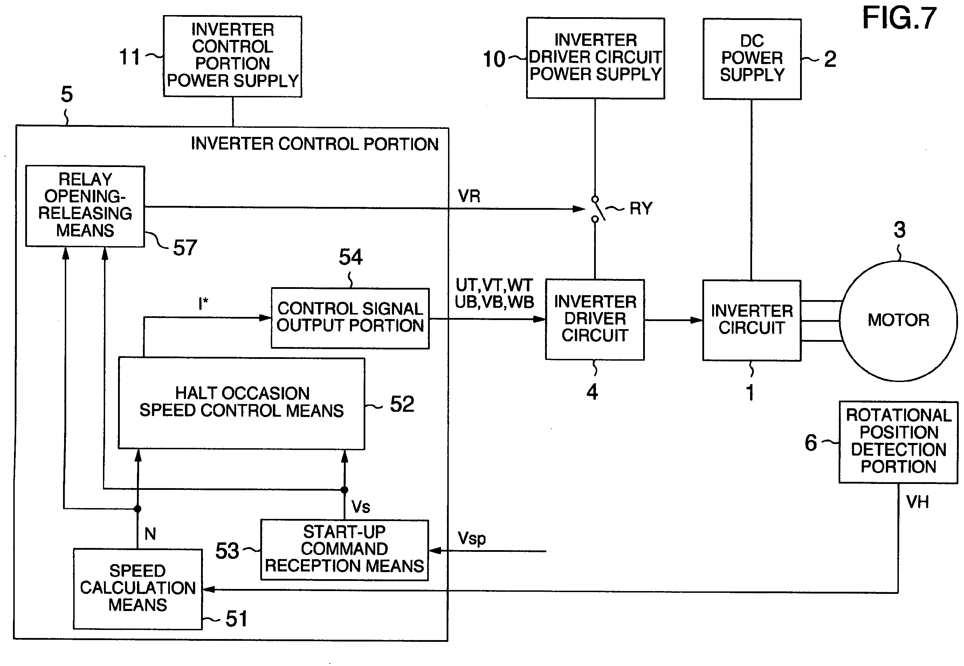

The Embodiment of the present invention is described by referring to FIG. 7.

The configuration of FIG. 7 is similar to the configuration of FIG. 1 except that an inverter driver circuit power supply 10 for supplying power-supply voltage to the inverter driver circuit 4, an inverter control portion power supply 11 for supplying power-supply voltage to the inverter control portion 5, a relay RY, and relay opening-releasing means 57 are added.

The relay opening-releasing means 57 is designed to permit the motor's rotational speed N and the start-up command signal Vs to be entered. When the start-up command Vsp is a halt command and when the rotational speed is equal to or higher than a given value, a relay actuating signal VR is output to release the opening of the relay RY.

Consequently, if the motor is rotated even under the condition where the supply of power-supply voltage to the inverter driver circuit is cut off, the supply of the power-supply voltage can be resumed.

In the present embodiment, if the motor is rotated by an external force under the condition where a command for deactivating the inverter circuit is being issued, a braking force is produced on the motor by inverter control, in the same way as in examples 1-4.

According to the present embodiment, if the motor is rotated by an external force under the condition where the power-supply voltage from the inverter driver circuit power supply 10 is cut off by the relay RY, a braking force can be produced on the motor because the power-supply voltage can be supplied to the inverter driver circuit 4 after the cutoff is released.

The relay opening-releasing means 57 can be realized within the inverter control portion 5 as in the configuration of FIG. 7. It may also be realized, for example, by a host control portion that outputs the start-up command Vsp.

In the configuration of FIG. 7 of the present embodiment, the relay RY is mounted between the inverter driver circuit power supply 10 and the inverter driver circuit 4. Where power-supply voltage ceases to be supplied from the inverter driver circuit power supply 10 to the inverter driver circuit 4 in response to opening of the relay RY, the relay RY may be mounted anywhere.

The relay RY of the present embodiment cuts off the supply of power-supply voltage to the inverter driver circuit 4. When the motor is rotated, the supply of the power-supply voltage can be resumed by similarly designing the relay that cuts off the supply of power-supply voltage to the inverter control portion 5.

## Claims

1.    A motor control apparatus comprising:

an inverter circuit (1) to which a DC voltage is applied;
a motor (3) connected with the inverter circuit (1);
an inverter driver circuit (4) for driving the inverter circuit (1);
an inverter control portion (5) for sending a control signal to the inverter driver circuit (4);
an inverter control portion power supply (11) for generating a power-supply voltage for the inverter control portion (5);
**characterised by**
a relay (RY) arranged to cut off the power supply from an inverter driver circuit power supply (10) to the inverter driver circuit (4); and
relay opening-releasing means (57) which is designed to permit a motor's rotational speed (N) and a start-up command signal (Vs) to be entered, wherein
when the start-up command signal (Vs) is a halt command and the rotational speed (N) is equal to or higher than a given value, the relay opening-releasing means (57) is adapted to output a relay actuating signal (VR) to release the opening of the relay (RY), so that when the relay (RY) is open and thus the power-supply voltage for the inverter control portion (5) is not supplied and the motor (3) is rotated by an external force, the opening of the relay (RY) is released in order to resume power supply to the inverter driver circuit (4), and if the motor (3) is rotated by an external force under the condition where a command for deactivating the inverter circuit (1) is being issued, a braking force is produced on the motor (3) by inverter control.

## Patentansprüche

1.    Motorsteuerungsvorrichtung, die Folgendes umfasst:

eine Wechselrichterschaltung (1), an die eine Gleichspannung angelegt ist;
einen Motor (3), der mit der Wechselrichterschaltung (1) verbunden ist;
eine Wechselrichter-Antriebsschaltung (4) zur Ansteuerung der Wechselrichterschaltung (1);
ein Wechselrichter-Steuerteil (5) zum Senden eines Steuersignals an die Wechselrichter-Antriebsschaltung (4);
eine Wechselrichter-Steuerteil-Leistungsversorgung (11) zur Erzeugung einer Versorgungsspannung für den Wechselrichter-Steuerteil (5);
**gekennzeichnet durch**
ein Relais (RY), das dazu eingerichtet ist, die Leistungszufuhr von einer Wechselrichter-Antriebsschaltungs-Leistungsversorgung (10) zu der Wechselrichter-Antriebsschaltung (4) zu unterbrechen; und
eine Relais-Öffnungsfreigabeeinrichtung (57), die dazu ausgelegt ist, die Eingabe einer Motordrehzahl (N) und eines Startbefehlssignals (Vs) zu ermöglichen, wobei
wenn das Startbefehlssignal (Vs) ein Anhaltebefehl ist und die Drehzahl (N) gleich oder größer als ein gegebener Wert ist, die Relais-Öffnungsfreigabeeinrichtung (57) dazu ausgelegt ist, ein Relais-Betätigungssignal (VR) auszugeben, um die Öffnung des Relais (RY) freizugeben, so dass, wenn das Relais (RY) offen ist und somit die Leistungsversorgungsspannung für den Wechselrichter-Steuerteil (5) nicht geliefert wird und der Motor (3) durch eine externe Kraft gedreht wird, die Öffnung des Relais (RY) aufgehoben wird, um die Leistungsversorgung der Wechselrichter-Antriebsschaltung (4) wieder aufzunehmen, und wenn der Motor (3) durch eine externe Kraft unter der Bedingung gedreht wird, dass ein Befehl zum Deaktivieren der Wechselrichterschaltung (1) ausgegeben wird, eine Bremskraft auf den Motor (3) durch die Wechselrichtersteuerung erzeugt wird.

## Revendications

1.    Appareil de commande de moteur comprenant :

un circuit inverseur (1) auquel une tension de CC est appliquée ;
un moteur (3) connecté avec le circuit inverseur (1) ;
un circuit (4) de pilotage d'inverseur pour piloter le circuit inverseur (1) ;

une partie (5) de commande d'inverseur pour envoyer un signal de commande au circuit (4) de pilotage d'inverseur ;

une alimentation électrique (11) de partie de commande d'inverseur pour générer une tension d'alimentation électrique pour la partie (5) de commande d'inverseur ;

**caractérisé par**

un relais (RY) agencé pour couper l'alimentation électrique d'une alimentation électrique (10) de circuit de pilotage d'inverseur au circuit (4) de pilotage d'inverseur ; et

un moyen (57) d'ouverture-relâchement de relais qui est conçu pour permettre qu'une vitesse de rotation de moteur (N) et un signal de commande de démarrage (Vs) soient entrés, dans lequel

lorsque le signal de commande de démarrage (Vs) est une commande d'arrêt et que la vitesse de rotation de moteur (N) est égale ou supérieure à une valeur donnée, le moyen (57) d'ouverture-relâchement de relais est adapté à délivrer en sortie un signal d'actionnement de relais (VR) pour relâcher l'ouverture du relais (RY), de telle sorte que le relais (RY) est ouvert et ainsi la tension d'alimentation électrique pour la partie (5) de commande d'inverseur n'est pas alimentée et le moteur (3) est mis en rotation par une force externe, l'ouverture du relais (RY) est relâchée afin de reprendre l'alimentation électrique du circuit (4) de pilotage d'inverseur, et si le moteur (3) est mis en rotation par une force externe sous la condition où une commande pour désactiver le circuit inverseur (1) est émise, une force de freinage est produite sur le moteur (3) par commande d'inverseur.

# FIG.1

INVERTER CONTROL PORTION — 5

54 — CONTROL SIGNAL OUTPUT PORTION

I*

52 — HALT OCCASION SPEED CONTROL MEANS

N

53 — START-UP COMMAND RECEPTION MEANS

Vs

51 — SPEED CALCULATION MEANS

UT,VT,WT
UB,VB,WB

4 — INVERTER DRIVER CIRCUIT

1 — INVERTER CIRCUIT

2 — DC POWER SUPPLY

3 — MOTOR

6 — ROTATIONAL POSITION DETECTION PORTION

VH

Vsp

EP 2 320 555 B1

FIG.2

# FIG.3

INVERTER CONTROL PORTION — 5

54 CONTROL SIGNAL OUTPUT PORTION

Iq*

UT,VT,WT UB,VB,WB

4 INVERTER DRIVER CIRCUIT

1 INVERTER CIRCUIT

DC POWER SUPPLY — 2

3 MOTOR

HALT OCCASION SPEED CONTROL MEANS

SPEED CONTROL MEANS

N*

COMMANDED SPEED CALCULATION MEANS

Tm

MOTOR TEM-PERATURE DETECTION MEANS

VTm

MOTOR TEMPERATURE INFORMATION DETECTION PORTION

8

523    522    524

52

ROTATIONAL POSITION DETECTION PORTION

6

N

Vs

SPEED CALCULATION MEANS

53 — START-UP COMMAND RECEPTION MEANS

Vsp

~51

VH

EP 2 320 555 B1

FIG.4

FIG.5

# FIG.6

EP 2 320 555 B1

FIG.7

DC POWER SUPPLY 2

INVERTER DRIVER CIRCUIT POWER SUPPLY 10

INVERTER CONTROL PORTION POWER SUPPLY 11

MOTOR 3

ROTATIONAL POSITION DETECTION PORTION 6 — VH

INVERTER CIRCUIT 1

RY

INVERTER DRIVER CIRCUIT 4 — UT,VT,WT UB,VB,WB

INVERTER CONTROL PORTION 5

VR

CONTROL SIGNAL OUTPUT PORTION 54

I*

HALT OCCASION SPEED CONTROL MEANS 52

Vs

START-UP COMMAND RECEPTION MEANS 53

Vsp

SPEED CALCULATION MEANS 51

N

RELAY OPENING-RELEASING MEANS 57

# FIG.8

DC POWER SUPPLY

2

S1 D1  S2 D2  S3 D3

MOTOR

3

S4 D4  S5 D5  S6 D6

C1  C2  C3

EP 2 320 555 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11275889 A
- JP 2007135400 A
- JP 10070897 A
- US 6404157 B1